# FASCICULE DE BREVET EUROPEEN

(11) **EP 4 538 544 B1**
(45) Date de publication et mention de la délivrance du brevet: **05.08.2026**
(21) Numéro de dépôt: 24204866.8
(22) Date de dépôt: 06.10.2024
(51) Int. Cl.: F16B 2/04, A63B 29/02

(54) **DISPOSITIF DE BLOCAGE À CAME MOBILE ET PROCÉDÉ DE FABRICATION D'UN DISPOSITIF DE BLOCAGE À CAME MOBILE**
BLOCKIERVORRICHTUNG MIT BEWEGLICHEM NOCKEN UND VERFAHREN ZUR HERSTELLUNG EINER BLOCKIERVORRICHTUNG MIT BEWEGLICHEM NOCKEN
MOVABLE CAM LOCKING DEVICE AND METHOD FOR MANUFACTURING MOVABLE CAM LOCKING DEVICE

(30) Priorité: 13.10.2023 FR 2311066
(43) Date de publication de la demande: 16.04.2025
(73) Titulaire: Zedel, 38920 Crolles (FR)
(72) Inventeur: PLAZE, Pierre, 73800 Chignin (FR); BERGEZ, Aurélie, 38610 Gières (FR); MAURICE, Alain, 38660 Plateau des petites Roches (FR)
(74) Mandataire: Talbot, Alexandre

(56) Documents cités:
- DE-C1- 3 545 306
- US-A1- 2009 152 421

## Description

### Domaine technique

L'invention est relative à un dispositif de blocage à came mobile et à un procédé de fabrication d'un dispositif de blocage à came mobile.

### Technique antérieure

Durant les phases d'escalade, un grimpeur est amené à poser des points de protection dans une paroi. Le grimpeur installe successivement plusieurs points de protection qui sont destinés à le soutenir en cas de chute. Certaines parois sont équipées de points de protection pré-installés, par exemple sous la forme de spits qui sont scellés dans la roche. D'autres parois ne sont pas équipées de tels points de sorte que le grimpeur doit trouver l'anfractuosité qui est la plus adaptée pour l'installation de son point de protection.

Lorsque le grimpeur doit poser ses points de protection, il est classique d'installer des coinceurs passifs et des coinceurs actifs. Les coinceurs sont destinés à s'insérer dans des anfractuosités qui sont généralement des trous, des fissures, des goulottes ou tout autre creux qui est assez profond pour autoriser l'introduction d'un coinceur. Chaque forme particulière d'anfractuosité est adaptée à une configuration particulière de coinceur. Les coinceurs passifs sont souvent formés par des pièces métalliques ayant une forme spécifique. Dans une première position spatiale, le coinceur peut s'insérer dans une faille d'une paroi et, dans une seconde position spatiale, le coinceur se coince entre deux faces opposées. Il est alors possible d'installer et de retirer facilement le coinceur ou de le coincer sous réserve de le placer dans la bonne configuration spatiale à l'intérieur du trou.

En plus des coinceurs passifs, il est connu des coinceurs actifs également appelés coinceurs à came ou dispositifs de blocage à came. Le coinceur à came est muni d'une tête qui possède une pluralité de cames. Les cames sont montées mobiles autour d'un ou de plusieurs arbres de rotation.

Les cames se déplacent entre une position rétractée et une position étendue. Dans la position rétractée, l'encombrement de la tête est moindre que dans la position étendue. La tête de coinceur est introduite dans une fissure dans sa position rétractée, puis les cames cherchent à se déplacer vers la position étendue ce qui plaque les cames contre les deux parois opposées d'une fissure. La forme des cames a pour effet d'augmenter la force appliquée sur les faces de la fissure lorsque l'on tire sur le coinceur.

De manière classique, un coinceur à came possède, à une première extrémité, une tête munie de plusieurs cames rotatives. La seconde extrémité du coinceur à came est une extrémité annulaire qui est configurée pour recevoir un mousqueton et servir de point d'ancrage pour le grimpeur.

L'actionnement des cames est obtenu au moyen d'une gâchette qui est montée mobile à coulissement le long de la tige. Lorsque l'utilisateur tire sur la gâchette en direction de l'extrémité annulaire, les cames se déplacent vers la position rétractée. Lorsque l'utilisateur arrête cette sollicitation, un ressort ramène les cames vers la position étendue.

La ou les cames mobiles sont montées à pivotement et elles sont reliées à la gâchette par un ou plusieurs éléments filaires qui sont généralement des câbles en acier de type « corde à piano ». De manière classique, le câble en acier a chacune de ses extrémités fixées à une came mobile et le câble en acier traverse la gâchette pour former la connexion mécanique entre les cames et la gâchette. La fixation peut être obtenue par sertissage ou bouterollage. La section du câble en acier étant faible, le câble se détériore rapidement et il est courant qu'il cède ce qui implique une opération de réparation dans un centre agréé. En outre, la fixation du câble avec la came rotative est d'autant plus difficile que la section du câble diminue et que la section de la came rotative est faible.

Dans une alternative de réalisation, le câble en acier est remplacé par un câble textile. Chaque extrémité du câble est fixée à une came. Chaque came est munie d'un trou qui permet au câble textile de traverser la came. L'extrémité du câble textile est fixée à la came par collage et/ou au moyen d'un nœud dont la section est supérieure à la section du trou. La fixation par collage ou au moyen d'un nœud devient de plus en plus compliquée au fur et à mesure que la taille du coinceur diminue car l'épaisseur du nœud fait que le câble textile déborde de la came et/ou que la longueur de câble devient difficile à maitriser.

Lors de la fabrication du dispositif de blocage à came, il existe un aléa sur la longueur de l'élément filaire avant sa fixation à la gâchette et aux cames et il existe un aléa dans la longueur effective de l'élément filaire après l'étape de fixation aux cames. Ces différentes variations font que les comportements des dispositifs de blocage à came peuvent varier ou doivent être compensées par des ressorts qui ont pour objet d'écarter la gâchette et les cames pour tendre l'élément filaire. Un dispositif de blocage à came est connu de DE 3545306 C1.

### Objet de l'invention

Un objet de l'invention consiste à prévoir un dispositif de blocage à came dont la liaison mécanique entre la gâchette et la came mobile est mieux maitrisée et est préférentiellement plus facile à remplacer.

Selon un aspect de l'invention, le dispositif de blocage à came selon la revendication 1 comporte :
- une tête ;
- au moins une came montée mobile à pivotement autour d'au moins un arbre de pivotement, la au moins une came étant mobile entre une position rétractée et une position étendue, le au moins un arbre de pivotement étant fixé à la tête, la au moins une came définissant au moins un premier trou et un deuxième trou qui sont traversants entre un premier côté et un deuxième côté de la au moins une came ;
- un ressort couplé fonctionnellement à la au moins une came pour solliciter la au moins une came vers la position étendue ;
- une extrémité annulaire couplée mécaniquement à la tête ;
- une tige s'étendant depuis la tête jusqu'à l'extrémité annulaire ;
- une gâchette montée mobile entre une première position de gâchette et une deuxième position de gâchette,
- un élément filaire textile ayant une première extrémité montée fixement avec la au moins une came, l'élément filaire textile reliant la gâchette à la au moins une came, l'élément filaire textile liant fonctionnellement la gâchette à la au moins une came, lorsque la gâchette est dans la deuxième position de gâchette la au moins une came est dans la position rétractée.

Le dispositif de blocage à came est remarquable en ce que l'élément filaire textile passe à travers le premier trou et le deuxième trou pour introduire du frottement entre l'élément filaire textile et la au moins une came et en ce qu'une portion terminale de l'élément filaire textile traverse un troisième trou reliant le premier coté et le deuxième coté et/ou est coincée dans au moins une rainure ménagée dans le premier côté ou le deuxième côté, la portion terminale de l'élément filaire textile étant disposée postérieurement au deuxième trou selon une direction longitudinale de l'élément filaire textile depuis la gâchette.

De préférence, la came définit le troisième trou. Un brin aval de l'élément filaire textile est coincé contre une face de la au moins une came par un brin amont de l'élément filaire textile, le brin aval étant disposé plus loin de la gâchette que le brin amont selon la direction longitudinale de l'élément filaire textile.

De manière avantageuse, la au moins une came définit la au moins une rainure. Une extrémité terminale de l'élément filaire textile est encastrée dans la au moins une rainure.

Dans une configuration particulière, la rainure relie le premier trou et le troisième trou.

Dans un développement avantageux, le brin aval est coincé dans la rainure.

Préférentiellement, l'élément filaire textile passe successivement par le premier trou et le deuxième trou selon la direction longitudinale de l'élément filaire textile depuis la gâchette. Le premier trou définit une première extrémité avec le premier côté et une deuxième extrémité avec le deuxième côté. L'élément filaire textile pénètre dans le premier trou depuis le deuxième côté, la deuxième extrémité formant une deuxième zone d'appui de l'élément textile filaire. La deuxième zone d'appui possède une arête qui est moins vive qu'une que la première extrémité du premier trou et/ou qu'une arête d'une extrémité deuxième trou avec l'une et/ou l'autre du premier côté et du deuxième côté.

Selon un mode de réalisation, une paroi latérale du premier trou relie une face de la au moins une came formant le deuxième côté. La zone d'appui de la deuxième extrémité est un arc de cercle ayant un rayon de courbure au moins égal à la moitié de l'épaisseur de l'élément filaire textile.

Dans un développement avantageux, la paroi latérale du premier trou définit une arête vive avec la deuxième face de la au moins une came et/ou une paroi latérale du deuxième trou définit avec la première face ou la deuxième face de la au moins une came.

Préférentiellement, le premier trou et le deuxième trou débouchent dans une zone amincie de la au moins une came, la zone amincie représentant un amincissement au moins égal à une épaisseur d'un brin de l'élément filaire textile.

Dans un autre développement avantageux, la section de l'élément filaire textile est inférieure à la section du premier trou et du deuxième trou d'une extrémité à l'autre de l'élément filaire textile selon la direction longitudinale de l'élément filaire textile.

Préférentiellement, l'élément filaire textile est uniquement fixé à la au moins une came par coincement dans la rainure et/ou par frottement aux extrémités du premier trou, du deuxième trou et du troisième trou.

Dans une configuration avantageuse, la au moins une came possède une première came et une deuxième came. L'élément filaire textile possède une première extrémité fixée à une première came et une deuxième extrémité opposée fixée à la deuxième came.

L'invention a également pour objet un procédé de fabrication d'un dispositif de blocage à came à un élément filaire de support qui soit facile à mettre en œuvre et notamment qui permet une fixation aisée d'un élément filaire textile avec une came tout en assurant une bonne fixation mécanique.

On tend à atteindre ce résultat au moyen d'un procédé de fabrication selon la revendication 14, comportant les étapes suivantes :
- fournir un élément filaire textile et un dispositif de blocage à came muni :
- d'une tête ;
- d'au moins une came montée mobile à pivotement autour d'au moins un arbre de pivotement, la au moins une came étant mobile entre une position rétractée et une position étendue, le au moins un arbre de pivotement étant fixé à la tête, la au moins une came définissant au moins un premier trou et un deuxième trou ;
- d'un ressort couplé fonctionnellement à la au moins une came pour solliciter la au moins une came vers la position étendue ;
- d'une extrémité annulaire couplée mécaniquement à la tête ;
- d'une tige s'étendant depuis la tête jusqu'à l'extrémité annulaire ;
- d'une gâchette liée fonctionnellement à la au moins une came, la gâchette étant montée mobile entre une première position de gâchette et une deuxième position de gâchette, et dans la deuxième position de gâchette la au moins une came est dans la position rétractée.

Le procédé de fabrication est remarquable en ce que la au moins une came comporte au moins un troisième trou et/ou au moins une rainure ;
dans lequel l'élément filaire passe à travers du premier trou, du deuxième trou et du au moins un troisième trou pour former des zones de frottement consécutives entre l'élément filaire textile et la au moins une came le long d'une direction longitudinale de l'élément filaire textile ; et/ou
dans lequel la au moins une rainure possède une largeur inférieure ou égale à une largeur de l'élément filaire textile, l'élément filaire textile étant encastré par déformation dans la au moins une rainure.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre schématiquement une vue en perspective d'un dispositif de blocage à came ;
- la figure 2 illustre schématiquement une vue de côté d'un dispositif de blocage à came ;
- la figure 3 illustre schématiquement une vue de face d'un dispositif de blocage à came ;
- la figure 4 illustre schématiquement une vue en perspective d'une came mobile et d'un élément filaire textile ;
- la figure 5a illustre schématiquement une vue du premier côté d'une came mobile avec un brin d'élément filaire textile ;
- la figure 5b illustre schématiquement une vue en coupe selon AA de la came mobile ;
- la figure 5c illustre schématiquement une vue du deuxième côté d'une came mobile ;
- la figure 6a illustre schématiquement une vue du premier côté d'une came mobile avec un brin d'élément filaire textile ;
- la figure 6b illustre schématiquement une vue en coupe selon AA de la came mobile avec un brin d'élément filaire textile qui traverse à plusieurs reprises la came mobile ;
- la figure 6c illustre schématiquement une vue du deuxième côté d'une came mobile avec un brin d'élément filaire textile ;
- la figure 7 illustre schématiquement une vue en perspective d'un autre dispositif de blocage à came ;
- la figure 8 illustre schématiquement une vue de côté d'un autre dispositif de blocage à came ;
- la figure 9 illustre schématiquement une vue de face d'un autre dispositif de blocage à came ;
- la figure 10 illustre schématiquement une vue en perspective d'une came mobile et d'un élément filaire textile d'un autre dispositif de blocage à came ;
- la figure 11a illustre schématiquement une vue du premier côté d'une came mobile d'un autre dispositif de blocage à came ;
- la figure 11b illustre schématiquement une vue en coupe selon AA de la came mobile d'un autre dispositif de blocage à came ;
- la figure 11c illustre schématiquement une vue du deuxième côté d'une came mobile d'un autre dispositif de blocage à came ;
- la figure 12a illustre schématiquement une vue du premier côté d'une came mobile avec un brin d'élément filaire textile d'un autre dispositif de blocage à came ;
- la figure 12b illustre schématiquement une vue en coupe selon AA de la came mobile avec un brin d'élément filaire textile qui traverse à plusieurs reprises la came mobile d'un autre dispositif de blocage à came ;
- la figure 12c illustre schématiquement une vue du deuxième côté d'une came mobile avec un brin d'élément filaire textile d'un autre dispositif de blocage à came.

### Description des modes de réalisation

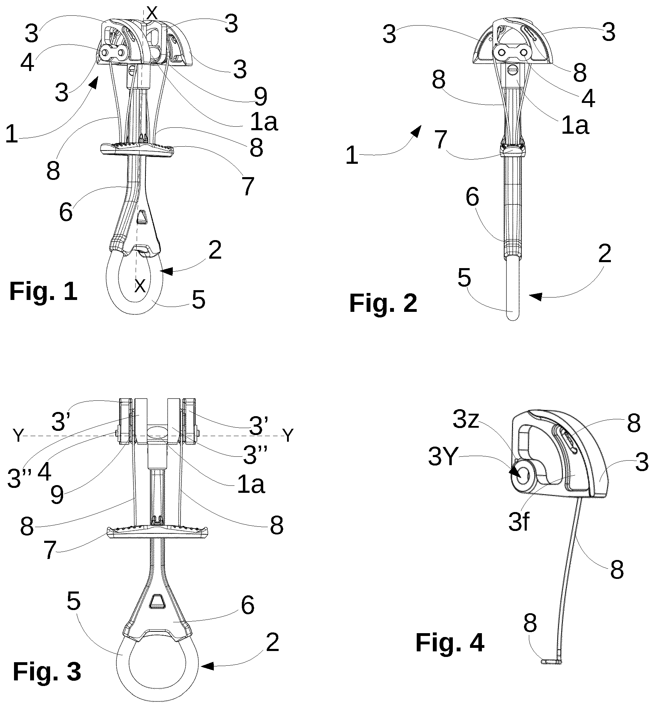

Les figures 1 à 12c illustrent différents modes de réalisation d'un dispositif de blocage à came également connu sous la dénomination « bloqueur à came ». Le dispositif de blocage à came est un dispositif de blocage actif.

Le dispositif de blocage à came comporte une première extrémité qui est munie d'une tête 1 et une deuxième extrémité opposée qui est une extrémité annulaire 2. La tête 1 est couplée à au moins une came 3 et de préférence à plusieurs cames 3 qui sont montées mobiles à pivotement entre une position étendue et une position rétractée. L'encombrement dans la position étendue est supérieur à l'encombrement dans la position retractée. La ou les cames 3 sont montées mobiles autour d'au moins un arbre de pivotement 4. La ou les cames 3 sont couplées mécaniquement à la tête 1 de manière à fournir une continuité mécanique entre les cames 3 et l'extrémité annulaire 2. L'arbre de pivotement 4 est fixé à la tête 1. Plus précisément l'arbre de pivotement 4 est fixé à un corps 1a de la tête 1. Le corps 1a peut être formé par une ou plusieurs pièces. Dans le mode de réalisation illustré aux figures 1 à 12c, le dispositif de blocage à came possède deux arbres de pivotement 4, de préférence parallèles. Dans le mode de réalisation illustré aux figures 4, 5a, 5b, 5c, 6a, 6b, 6c, 10, 11a, 11b, 11c, 12a, 12b, 12c, la came 3 définit un orifice 3Y destiné à loger l'arbre de pivotement 4 pour que la came pivote autour de l'arbre de pivotement 4.

De manière conventionnelle, l'extrémité annulaire 2 se présente sous la forme d'un anneau qui définit un trou traversant configuré pour recevoir un mousqueton. L'extrémité annulaire 2 est apte à supporter le poids d'un utilisateur. L'anneau définit un trou traversant configuré pour recevoir une partie de la main lors des phases d'actionnement des cames 3.

Le dispositif de blocage à came possède un élément filaire 5 qui relie mécaniquement la tête 1 à l'extrémité annulaire 2. L'élément filaire 5 couple mécaniquement les cames 3 à l'extrémité annulaire 2 de sorte qu'un utilisateur fixé à l'extrémité annulaire 2 est retenu au moyen des cames 3 coincées par exemple dans une fissure. L'élément filaire 5 est l'élément qui assure la continuité mécanique entre la tête 1 et l'extrémité annulaire 2. L'élément filaire 5 est fixé à la tête 1 de manière à coupler mécaniquement l'élément filaire 5 et la tête 1. L'élément filaire 5 s'étend selon une première direction XX de manière à réaliser la tenue mécanique selon cette première direction XX. L'arbre de pivotement 4 s'étend principalement selon une deuxième direction YY qui est perpendiculaire ou sensiblement perpendiculaire à la première direction XX.

L'élément filaire 5 est fixé à la tête 1 et il s'étend continument depuis la tête 1 jusqu'à atteindre l'extrémité annulaire 2 pour réaliser la continuité mécanique le long du dispositif de blocage. L'élément filaire 5 peut se présenter sous la forme d'un anneau, de préférence un anneau en matériau textile. L'élément filaire 5 peut être une sangle ou une corde. L'anneau en matériau textile peut être un anneau en polyéthylène de masse molaire très élevée, par exemple dans un matériau commercialisé sous les dénominations Dyneema ou Spectra. Un élément filaire métallique, par exemple un câble, est également utilisable.

Dans un mode de réalisation particulier, la tête 1 est munie d'un ancrage, de préférence un ancrage sous la forme d'un arbre. De préférence, l'élément filaire 5 fait le tour de l'ancrage afin de fixer l'élément filaire 5 avec l'ancrage de manière à autoriser la reprise d'effort avec l'extrémité annulaire 2. En d'autres termes, l'élément filaire 5 définit au moins une boucle et l'arbre d'ancrage passe au travers de la boucle pour réaliser la reprise d'effort.

Il est avantageux que l'anneau soit obtenu par couture des deux terminaisons de l'élément filaire 5 l'une sur l'autre, l'élément filaire 5 étant un textile. La couture est un procédé bien maitrisé ce qui facilite l'obtention d'un anneau dont la résistance mécanique est maitrisée. L'utilisation d'une étape de couture permet de former un anneau qui est moins couteux et dont la dimension est mieux maitrisée que son équivalent obtenu par épissure. Il est avantageux que l'anneau soit dépourvu de sertissage et d'épissure.

Le dispositif de blocage comporte préférentiellement une tige 6 qui s'étend depuis la tête 1 jusqu'à l'extrémité annulaire 2. De manière préférentielle, la tige 6 est plus rigide que l'élément filaire 5 perpendiculairement à la première direction XX ce qui permet de tenir le dispositif de blocage à came au moyen de la tige 6 et de placer précisément le dispositif de blocage dans une fissure en comparaison d'un dispositif équivalent sans la tige 6.

Le dispositif de blocage comporte un système d'actionnement couplé à la au moins une came 3. Le système d'actionnement est configuré pour engager sélectivement la position rétractée de la au moins une came 3. Le système d'actionnement possède une gâchette 7 montée à coulissement le long d'une première direction XX reliant la tête 1 et l'extrémité annulaire 2. La gâchette 7 est montée à coulissement le long de l'élément filaire 5 et le long de la tige 6 le cas échéant. La gâchette 7 se déplace par rapport à la tête 1 et à l'extrémité annulaire 2.

En d'autres termes, la gâchette 7 est montée mobile par rapport à la tête 1 et elle est couplée à la au moins une came 3. La gâchette 7 est couplée à la au moins une came 3 de sorte que le déplacement de la gâchette 7 en s'éloignant de la tête 1 entraine un déplacement de la au moins une came 3 vers la position rétractée. De manière privilégiée, la gâchette 7 est couplée à toutes les cames 3 de sorte que le déplacement de la gâchette 7 en s'éloignant de la tête 1 entraine un déplacement des cames 3 vers leur position rétractée. La première position de gâchette est plus proche de la tête 1 que la deuxième position de gâchette.

La gâchette 7 est mobile entre une première position de gâchette et une deuxième position de gâchette. Dans la première position de gâchette, la ou les cames 3 peuvent être dans la position étendue. Dans la deuxième position de gâchette, la ou les cames 3 sont dans la position rétractée. Hors de la première position de gâchette, la ou les cames 3 sont hors de la position étendue.

Il est avantageux qu'un déplacement de la gâchette 7 en direction de la tête 1 n'impose aucun mouvement de la came 3 et notamment ne traduise pas un déplacement de la came 3 vers la position étendue.

De manière préférentielle, la tige 6 s'étend continument depuis la tête 1 jusqu'à l'extrémité annulaire 2 de manière à fournir une bonne tenue mécanique lorsque le dispositif de blocage est tenu par l'extrémité annulaire 2 et la gâchette 7. Il est avantageux que la gâchette 7 soit montée coulissante le long de la tige 6 et que la tige 6 sépare l'élément filaire 5 et la gâchette 7. La tige 6 est préférentiellement creuse.

Dans un mode de réalisation préférentiel, la gâchette 7 est montée à coulissement le long de l'élément filaire 5 entre la tête 1 et l'extrémité annulaire 2. La gâchette 7 est couplée à la came 3 ou à chaque came 3 par un élément filaire textile 8. L'élément filaire textile 8 est un élément textile, de préférence un élément filaire en matériau synthétique, par exemple en matériau plastique. L'élément filaire textile 8 couple la came 3 à la gâchette 7 et permet de retranscrire un déplacement de la gâchette 7 vers l'extrémité annulaire 2 en un déplacement de la came 3 vers la position rétractée. L'élément filaire textile 8 est illustré aux figures 1, 2, 3, 4, 6a, 6b, 6c, 7, 8, 9, 10, 12a, 12b et 12c.

L'élément filaire textile 8 forme un lien flexible entre la came 3 et la gâchette 7.

Le lien flexible permet de solliciter la came 3 vers la position rétractée lorsque la gâchette 7 est déplacée en direction de l'extrémité annulaire 2. Le lien flexible ne permet pas de solliciter la came 3 vers la position étendue lorsque la gâchette 7 est déplacée en direction de la tête 1.

Avantageusement, la gâchette 7 présente des trous d'ancrage 7a qui sont destinés au passage de l'élément filaire textile 8 à travers la gâchette 7. L'élément filaire textile 8 s'étend depuis la gâchette 7 jusqu'à une des cames 3. Préférentiellement, la première et la deuxième extrémités opposées de l'élément filaire textile 8 sont montées fixement à une des cames 3 et l'élément filaire textile 8 est fixé à la gâchette 7 pour que le déplacement de la gâchette 7 vers l'extrémité annulaire 2 cause le pivotement des cames 3 vers la position rétractée.

Le dispositif de blocage à came possède un ressort 9 qui est configuré pour solliciter la au moins une came 3 vers la position étendue. Le ressort 9 peut être réalisé dans une technologie quelconque, il peut s'agir d'un ressort hélicoïdal fonctionnant en traction, en compression, en torsion ou en flexion. Il peut également s'agir d'une lame ou d'un fil métallique qui est déformé élastiquement.

En l'absence de sollicitation et d'obstacle, le ressort 9 place la ou les cames 3 dans la position étendue. L'effort appliqué sur la gâchette 7 pour s'éloigner de la tête 1 correspond à un effort appliqué sur la came 3 qui est opposé à l'effort appliqué par le ressort 9 pour déplacer la ou les cames 3 vers la position rétractée. Dans un mode de réalisation, le ressort 9 est fixé d'une part à la came 3 et d'autre part à la tête 1. Dans un autre mode de réalisation, le ressort 9 est fixé d'une part à une première came 3' et d'autre part à une deuxième came 3" qui est par exemple montée sur un autre arbre de pivotement 4 que la première came 3'. Le dispositif de blocage peut comporter autant de ressort 9 que de came 3 ou autant de ressort 9 que de paires de cames 3. Les ressorts 9 sont illustrés aux figures 1 et 3. Les figures illustrent des trous d'accrochage 3z destiné à fixer des extrémités des ressorts 9.

En sollicitant la ou les cames 3 vers la position étendue, le ressort 9 sollicite la gâchette 7 vers la première position de gâchette. Le ressort 9 est configuré pour que la position étendue et la première position de gâchette soient des positions de repos du dispositif de blocage, c'est-à-dire en l'absence de sollicitation extérieure.

Le dispositif de blocage à came comporte au moins une tige 6 qui s'étend depuis la tête 1 en direction de l'extrémité annulaire 2, c'est-à-dire selon la première direction XX. Dans les modes de réalisation illustrés aux figures 1 à 10, le dispositif de blocage à came comporte une seule tige 6 qui s'étend longitudinalement selon la première direction XX en butée contre la tête 1 et qui définit le trou traversant de l'extrémité annulaire 2.

Il est particulièrement avantageux de réaliser la ou les cames 3 dans un matériau métallique, préférentiellement dans un alliage d'aluminium ou dans un acier.

L'utilisation d'un élément filaire textile 8 qui assure la connexion mécanique entre la ou les cames 3 et la gâchette 7 est particulièrement avantageuse en comparaison d'un élément filaire métallique. Cependant, il est également important que le dispositif de blocage soit en mesure d'assurer une fixation efficace de l'élément filaire textile 8 sur la came 3, c'est-à-dire un montage immobile d'une portion de l'élément filaire textile 8 sur une partie de la came 3. La fixation doit résister aux efforts qui existent entre la gâchette 7 et la came 3. Cette précaution permet de retranscrire efficacement le déplacement de la gâchette 7 vers l'extrémité annulaire 2 en un pivotement de la came 3 vers la position rétractée. Il est encore important que cette fixation de l'extrémité de l'élément filaire textile 8 ne soit génératrice d'un encombrement important car cela complique son utilisation pour les dispositifs de blocage de petites tailles. Préférentiellement, la configuration de fixation qui réalise la fixation entre l'extrémité de l'élément filaire textile 8 et une came 3 assure également une fonction de réglage de la longueur de l'élément filaire textile 8 afin de mieux pouvoir s'adapter à la longueur réelle de l'élément filaire textile 8 et à l'écartement entre la position de repos de la gâchette 7 et la came 3.

Lors de la formation, l'élément filaire textile 8 est réalisé pour présenter une longueur cible. Cependant selon les aléas de fabrication, la longueur effective peut être légèrement plus importante ou plus faible que la longueur cible. Cela a pour effet de déplacer la position de la gâchette 7 par rapport à la tête 1 et donc de modifier le fonctionnement du dispositif de blocage. Si l'élément filaire textile 8 est trop court, il n'est pas possible d'atteindre la position étendue où l'encombrement de la came 3 est maximal. Si l'élément filaire textile est trop grand, la rétraction complète des cames peut ne pas être possible où le surplus d'élément filaire textile 8 peut gêner le déplacement des cames 3 ou il doit être coupé. Il est donc avantageux de prévoir que les variations de longueurs puissent être compensées lors de la fixation de l'élément filaire textile 8 avec la came 3.

Les inventeurs ont observé que de multiples passages de l'élément filaire textile 8 à travers des trous et/ou rainures ménagés dans la came 3 permettent de générer un frottement important entre l'élément filaire textile 8 et la came 3. Ces frottements permettent d'assurer la fixation de l'élément filaire textile 8 sur la came 3 et le déplacement de la came 3 lorsque l'on déplace la gâchette 7 vers l'extrémité annulaire 2.

Pour assurer une fixation efficace d'une extrémité de l'élément filaire textile 8 avec une came 3, la came 3 définit au moins un premier trou 3a et un deuxième trou 3b qui sont tous les deux des trous traversants. Ces trous relient un premier côté de la came 3 avec un deuxième côté de la came 3. Le premier côté est opposé au deuxième côté selon une deuxième direction YY qui correspond à l'axe de pivotement de la ou des cames 3. Le brin d'élément filaire textile 8 passe à travers le premier trou 3a et à travers le deuxième trou 3b. Le premier trou 3a est distinct du deuxième trou 3b et les deux trous sont séparés par une bande de matière. En d'autres termes, les deux trous ne sont pas contigus.

Pour assurer une fixation efficace d'une extrémité de l'élément filaire textile 8 avec une came 3, la came 3 définit au moins l'un d'un troisième trou 3c ou d'une rainure 3d. Le troisième trou 3c est un trou traversant qui relie le premier côté et le deuxième côté. Le troisième trou 3c peut être contigu à l'un du premier trou 3a ou du deuxième trou 3b ou il est être réalisé à distance des deux trous précédents. La rainure 3d peut être réalisée à la surface du premier côté ou du deuxième coté. La rainure 3d possède au moins une portion dont la largeur est inférieure ou égale à la largeur de l'élément filaire textile 8. L'élément filaire textile 8 est coincé par encastrement dans la rainure 3d. **Il** est avantageux que l'élément filaire textile 8 entrent dans le premier trou 3a depuis le deuxième côté en direction du premier côté et que la rainure 3d soit formée dans le premier côté. L'élément filaire textile 8 entrent dans le premier trou 3a depuis le deuxième côté en direction du premier côté dans un cheminement selon la direction longitudinal de l'élément filaire textile 8 depuis la gâchette 7.

En d'autres termes, une portion terminale de l'élément filaire textile 8 traverse le troisième trou 3c reliant le premier coté et le deuxième coté et/ou est coincée dans la rainure 3d ménagée dans le premier côté ou le deuxième côté. La portion terminale de l'élément filaire textile 8 est disposée postérieurement au deuxième trou 3b selon une direction longitudinale de l'élément filaire textile 8 depuis la gâchette 7.

Dans un mode de réalisation particulier illustré aux figures 1 à 12c, la came 3 définit le premier trou 3a, le deuxième trou 3b et le troisième trou 3c. L'élément filaire textile 8 passe à travers le premier trou 3a, le deuxième trou 3b et le troisième trou 3c. L'élément filaire textile 8 traverse successivement le premier trou 3a, le deuxième trou 3b et le troisième trou 3c selon la direction longitudinale de l'élément filaire textile 8 à partir de la gâchette 7. La direction longitudinale est la direction qui relie les deux extrémités opposées de l'élément filaire textile 8. Par exemple, les deux extrémités sont fixées à deux cames 3 différentes.

Comme cela est illustré aux figures 1, 2, 4, 6a, 6b, 6c, 7, 8, 10, 12a, 12b et 12c, l'élément filaire textile 8 chemine du premier côté au deuxième côté et inversement en passant par les trous. Les changements de direction font que l'élément filaire textile 8 touche les extrémités des trous pour changer de direction ce qui introduit du frottement. Les multiples frottements permettent d'assurer la fixation de l'élément filaire textile 8. Selon les besoins, au moins un quatrième trou peut être envisagé afin d'augmenter le frottement.

Les sections du premier trou 3a, du deuxième trou 3b et du troisième trou 3c peuvent être identiques ou différentes. Les sections sont préférentiellement légèrement supérieures ou égales à la section de l'élément filaire textile 8 de manière à autoriser un passage facilité de l'élément filaire textile 8 lors de la fabrication du dispositif de blocage ou lors du remplacement de l'élément filaire textile 8.

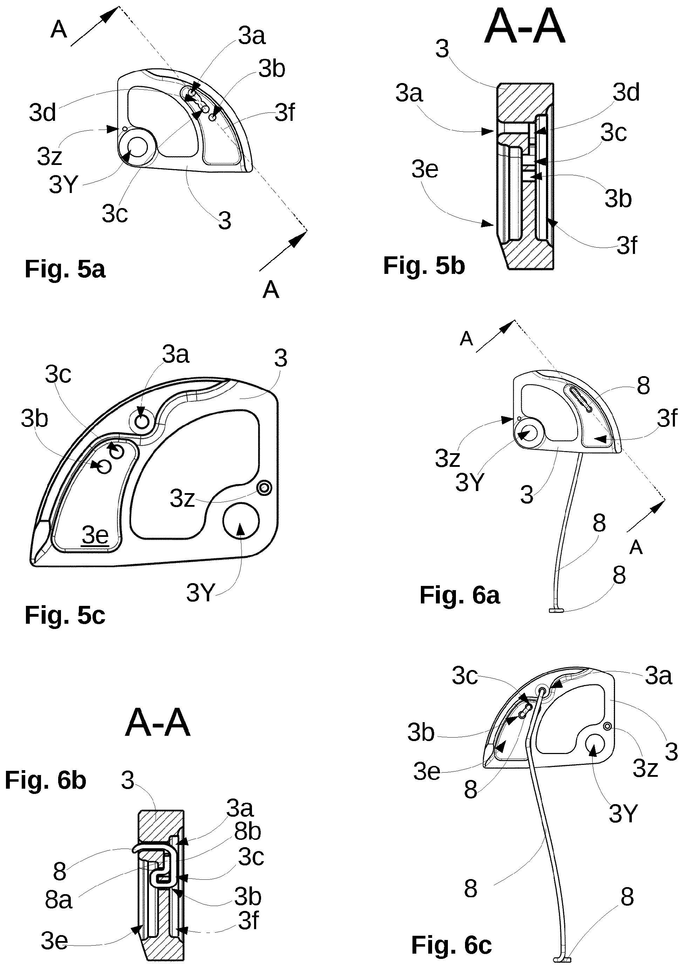

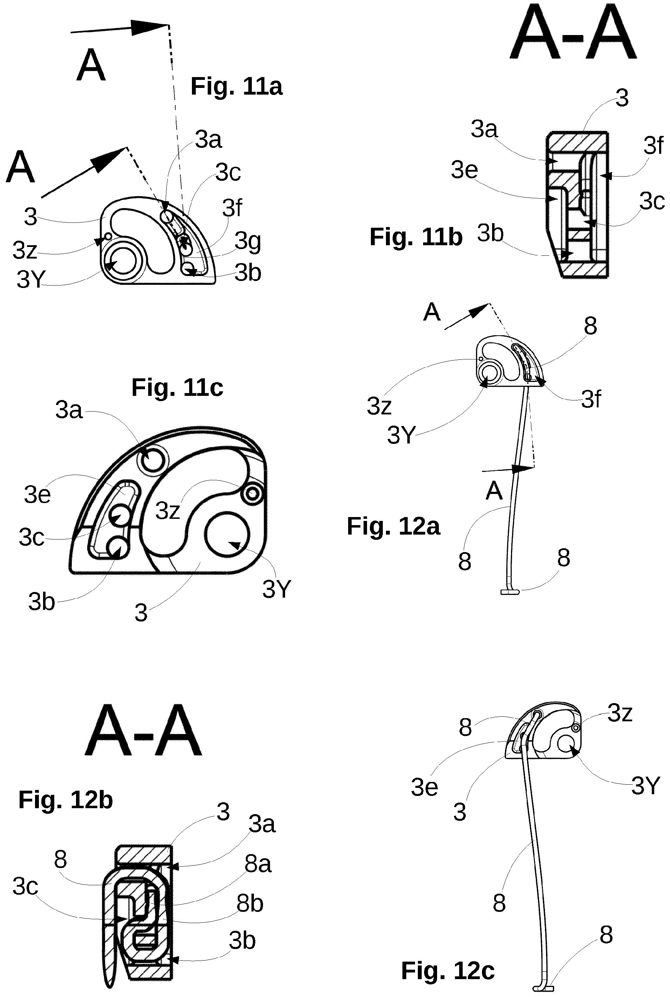

De manière privilégiée, le troisième trou 3c traversant est disposé dans le secteur angulaire délimité par la droite reliant l'axe de pivotement de la came 3 et le centre du premier trou 3a et par la droite reliant l'axe de pivotement de la came 3 et le centre du deuxième trou 3b. L'observation est faite selon l'axe de pivotement de la came 3 comme cela est illustré aux figures 5a, 5c, 11a et 11c. Par centre du premier trou 3a et centre du deuxième trou 3b, on entend le centre du cercle lorsque le trou est circulaire ou le barycentre de la forme définie par le trou. Avec un tel agencement, l'élément filaire textile 8 possède une portion qui est dirigée dans la direction opposée à la direction prise par une portion précédente selon la direction longitudinale de l'élément filaire textile 8. Le sens de la direction est observé le long de l'élément filaire textile 8 depuis la gâchette 7 jusqu'à la terminaison de l'élément filaire textile 8.

Avantageusement et comme illustré aux figures 4, 6a, 6b, 6c, 10, 12a, 12b et 12c, l'élément filaire textile 8 forme un anneau entourant la came 3. Un premier brin 8a de l'élément filaire textile 8 est coincé contre une face de la came 3 par un deuxième brin 8b de l'élément filaire textile 8. Le premier brin 8a de l'élément filaire textile 8 est plus éloigné de la portion connectée à la gâchette 7 que le deuxième brin 8b selon la direction longitudinale de l'élément filaire textile 8. Lors du déplacement de la gâchette 7 vers l'extrémité annulaire 2, le deuxième brin 8b applique un effort sur le premier brin 8a pour le plaquer contre la face de la came 3. L'effort appliqué par le deuxième brin 8b empêche le déplacement du premier brin 8a ce qui assure la fixation de l'élément filaire textile 8 avec la came 3. Le premier brin 8a de l'élément filaire textile 8 est monté fixement à la came 3.

De manière plus générale, un brin amont coince un brin aval contre une face de côté de la came 3. Plus l'effort appliqué par la gâchette 7 est important, plus le bin amont coince le brin aval contre la came et plus la fixation est assurée. La partie amont est la partie la plus proche de la gâchette 7 selon la direction longitudinale de l'élément filaire textile 8. Cette configuration peut être utilisée avec trois, quatre ou plus de trous traversant la came 3.

Avantageusement, le premier brin 8a est un brin terminal de l'élément filaire textile 8 qui est coincé contre une face de la came 3 par un deuxième brin 8b de l'élément filaire textile 8. Le brin terminal est la partie de l'élément filaire textile 8 la plus éloignée de la portion connectée à la gâchette 7.

La fixation peut être dépourvue de colle, de nœud et assurer la tenue des efforts appliqués par la gâchette 7 sur la came 3 pour s'opposer aux efforts du ressort 9. L'épaisseur de la fixation correspond sensiblement à deux fois l'épaisseur de l'élément filaire textile 8. Il est avantageux de réaliser un amincissement d'une portion de la came 3 pour former une zone amincie 3e de sorte que le ou les brins d'élément filaire textile 8 ne forment pas une zone saillante au-delà de l'encombrement de la came, c'est-à-dire le volume occupé par la came 3 dans ses déplacements entre la position étendue et la position rétractée en l'absence d'élément filaire textile 8.

Dans un mode de réalisation avantageux illustré aux figures 4, 5a et 5c, le premier trou 3a traversant, le deuxième trou 3b traversant et le troisième trou 3c traversant sont alignés. Lors de l'application d'un effort sur l'élément filaire textile 8 en direction de la gâchette 7, le premier brin 8a et le deuxième brin 8b cherche à se déplacer dans des directions différentes. Cet agencement des deux brins tend à rend plus compliqué le déplacement du premier brin 8a et du deuxième brin 8b.

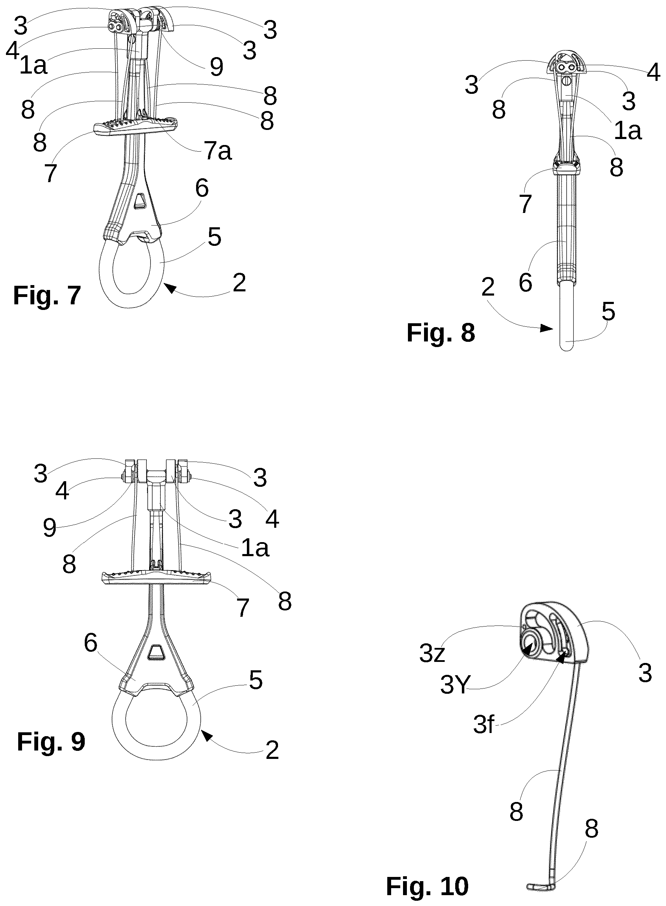

Dans une alternative de réalisation illustrée aux figures 10, 12a et 12c, le premier trou 3a traversant, le deuxième trou 3b traversant et le troisième trou 3c traversant ne sont pas alignés, mais la came 3 définit un renfoncement 3f avec un mur 3g. Le renfoncement 3f est une zone amincie. Le mur 3g relie les trois trous de sorte que la portion d'élément filaire textile 8 reliant le premier trou 3a et le deuxième trou 3b recouvre le troisième trou 3c dans une observation selon la deuxième direction YY. Le premier brin 8a est coincé contre la paroi de la came 3 au moyen du deuxième brin 8b comme pour le mode de réalisation précédent.

Les configurations présentées ci-dessus sont particulièrement avantageuses car elles permettent de réaliser la fixation de l'élément filaire textile 8 avec la came 3 et elles offrent une liberté de réglage de la longueur de l'élément filaire textile 8. Préférentiellement, l'installation de la portion terminale de l'élément filaire textile 8 dans un renfoncement de la came 3 permet de s'assurer que le surplus d'élément filaire textile 8 ne va pas gêner les déplacements des cames 3 les unes par rapport aux autres.

En alternative ou en complément du troisième trou 3c, la came 3 peut définir une rainure 3d sur un de ces côtés. Avantageusement, la rainure 3d est disposée après le premier trou 3a et après le deuxième trou 3b, le long de la direction longitudinale de l'élément filaire textile 8 à partir de la gâchette 7. La rainure 3d permet de coincer une portion de l'élément filaire textile 8, de préférence, la portion terminale de l'élément filaire textile 8. Préférentiellement, la rainure 3d permet de coincer une quantité plus ou moins importante d'élément filaire textile 8 ce qui permet de réaliser le réglage de la longueur effective de l'élément filaire textile 8.

De manière préférentielle illustrée aux différentes figures, la rainure 3d est disposée entre le deuxième trou 3b et le troisième trou 3c. En plus d'avoir le premier brin 8a coincé contre la paroi de la came 3 au moyen du deuxième brin 8b, le premier brin 8a est installé dans la rainure 3d ce qui permet d'avoir un autre coincement du premier brin 8a. L'élément filaire textile 8 est alors en mesure de supporter des efforts beaucoup plus importants.

Avantageusement, la rainure 3d relie le premier trou 3a et le troisième trou 3c comme cela est illustré aux figures 5a et 11a. Cette configuration permet d'améliorer le compromis entre la fixation de l'élément filaire textile 8, l'encombrement de la came 3 et la résistance mécanique de la came 3.

Dans un mode de réalisation particulier illustré aux figures 5b, 6b, 11b et 12b, l'élément filaire textile 8 passe successivement par le premier trou 3a et le deuxième trou 3b selon la direction longitudinale de l'élément filaire textile 8 depuis la gâchette 7 avant de se coincer dans la rainure 3d et/ou de passer dans le troisième trou 3c. Les passages successifs de l'élément filaire textile 8 à travers les multiples trous introduits des changements de direction de l'élément filaire textile 8 et donc des frottements entre l'élément filaire textile 8 et la came 3. L'élément filaire textile 8 prend appui à chacune des extrémités du premier trou 3a, du deuxième trou 3b et du troisième trou 3c le cas échéant. Chaque prise d'appui génère un frottement qui rend plus compliqué le glissement de l'élément filaire textile 8 par rapport à la came 3.

Afin d'avoir un frottement important entre l'élément filaire textile 8 et la came 3, il est préférable qu'au moins un du premier trou 3a, du deuxième trou 3b et du troisième trou 3c définisse une arête vive avec la paroi qui définit le premier côté ou le deuxième côté de la came 3. De préférence, l'angle entre la paroi latérale du trou et la paroi du côté est compris entre 75° et 105°, plus préférentiellement égale à 90°.

De manière avantageuse, le premier trou 3a possède une deuxième extrémité avec une zone d'appui dont l'arête est moins vive qu'au moins une autre arête sur laquelle s'appuie l'élément filaire textile 8. En d'autres termes, l'arête de la zone d'appui de la deuxième extrémité est moins vive que l'arête de la zone d'appui de la première extrémité du premier trou 3a ou que l'arête de l'une quelconque des zones d'appui du deuxième trou 3b ou du troisième trou 3c le cas échéant. Préférentiellement, le premier trou 3a possède une deuxième extrémité dont l'arête de la zone d'appui est moins vive que l'arête de l'autre zone d'appui du premier trou 3a et que les arêtes du deuxième trou 3b. Encore plus préférentiellement le premier trou 3a possède une deuxième extrémité à dont l'arête est moins vive que toutes les autres arêtes sur lesquelles s'appuie l'élément filaire textile 8. Par moins vive, on entend une arête dont l'angle entre la paroi latérale du trou et la paroi du bord latéral de la came définissant le côté est plus éloigné de la valeur de 90° que l'arête de comparaison. On entend également que la zone d'appui possède un plus grand nombre d'arêtes, par exemple deux, trois ou quatre arêtes.

Avantageusement, le premier trou 3a possède une deuxième extrémité dont la zone d'appui est bord arrondi, c'est-à-dire dépourvu d'arête vive. Lorsque le bord est arrondi, il est avantageux que le bord définisse un rayon qui est supérieur au à la moitié de l'épaisseur de l'élément filaire textile 8, de préférence supérieur à deux fois l'épaisseur de l'élément filaire textile 8. Une zone d'appui avec un bord arrondi correspond à une zone d'appui qui possède une infinité d'arêtes.

Les inventeurs ont observé que la contrainte appliquée par la gâchette 7 sur l'élément filaire textile 8 en association avec le pivotement de la came 3 a pour effet de dégrader l'élément filaire textile 8 dans la zone de frottement. Un tel comportement n'est pas observé pour les autres points d'appui pour lesquels les déplacements sont beaucoup plus faibles. En introduisant un plus grand nombre d'arêtes et de préférence une portion arrondie, il est possible d'améliorer la durée de vie de l'élément filaire textile 8 ce qui permet d'avoir un plus grand choix dans les matériaux accessibles et dans les sections utilisables. Cela permet notamment de réduire la section de l'élément filaire textile 8 ce qui est préférable pour les dispositifs de blocage de petite taille car cela permet de réduire les sections des trous, des rainures, des zones d'amincissement.

Dans un mode de réalisation privilégié illustré aux figures 1 à 12c, le premier trou 3a et le deuxième trou 3b débouchent dans une zone amincie de la au moins une came 3. La zone amincie représente un amincissement au moins égal à une épaisseur d'un brin de l'élément filaire textile 8. La zone amincie du premier côté représente un amincissement par rapport à la zone la plus saillante du premier côté. La zone amincie du deuxième côté représente un amincissement par rapport à la zone la plus saillante du deuxième côté. Le caractère saillant est observé selon l'axe de pivotement de la came 3. La zone saillante est la zone la plus éloignée du plan médian de la came et perpendiculaire à la deuxième direction YY. L'utilisation d'une zone amincie, de préférence amincie sur chacun des côtés permet de rapprocher les cames les unes des autres sans que l'élément filaire textile 8 qui serpente entre les côtés opposés ne gêne le pivotement.

Comme indiqué plus haut, il est préférable que la section de l'élément filaire textile 8 soit inférieure à la section du premier trou 3a et du deuxième trou 3b d'une extrémité à l'autre de l'élément filaire textile 8 selon la direction longitudinale de l'élément filaire textile 8. La section est observée en l'absence de toute sollicitation, notamment de sollicitation en traction longitudinale de l'élément filaire textile 8 de manière à permettre une installation aisée par un individu.

Dans un mode de réalisation préférentiel, l'élément filaire textile 8 est uniquement fixé à la came 3 par coincement dans la rainure 3d et/ou par frottement aux extrémités du premier trou 3a, du deuxième trou 3b et du troisième trou 3c. Cette configuration permet d'éviter la formation d'un nœud dont la position et l'encombrement sont mal maitrisés ce qui induit un aléa sur la longueur effective entre la gâchette 7 et la came 3. Cette configuration permet d'éviter la formation d'un point de colle dont la qualité peut évoluer avec le temps car le dispositif de blocage est destiné à être utilisé en extérieur dans des conditions météorologiques diverses.

Dans un mode de réalisation particulier, le dispositif de blocage à came possède au moins deux cames 3. Une première came 3' et une deuxième came 3" sont montées pivotantes et l'élément filaire textile 8 possède une première extrémité fixée à une première came 3' et une deuxième extrémité opposée fixée à la deuxième came 3". Les deux cames définissent les trous et/ou rainures tels qu'ils ont été décrits plus haut. Chacune des deux extrémités est fixée selon un des modes de réalisation qui ont été présentés précédemment.

Pour la fabrication d'un dispositif de blocage à came, on fournit d'une part l'élément filaire textile 8 et d'autre part le dispositif de blocage à came tel qu'il a été présenté selon l'une quelconque des configurations précédentes.

L'élément filaire textile 8 est connecté à la gâchette 7 et l'extrémité terminale du brin d'élément filaire textile 8 est introduite dans le premier trou 3a, puis dans le deuxième trou 3b. L'extrémité terminale du brin passe ensuite à travers le troisième trou 3c ou à travers la rainure 3d. Préférentiellement, l'extrémité terminale du brin passe ensuite à travers le troisième trou 3c puis est encastrée dans la rainure 3d.

Préférentiellement, le troisième trou 3c est disposé dans le secteur angulaire délimité par le première trou 3a, l'axe de rotation de la came 3 et le deuxième trou 3b. La circulation de l'élément filaire textile 8 par les trois trous permet de former un anneau dont l'extrémité terminale du brin est coincée par un autre brin.

Afin de régler l'élément filaire textile 8 à la bonne longueur, il est avantageux de faire passer l'élément filaire textile 8 par les trous et éventuellement la ou les rainures puis de placer la fin du brin dans la rainure destinée à recevoir cette partie du brin ou entre les deux derniers trous utilisés pour fixer l'élément filaire textile 8 puis de tirer sur la gâchette 7 pour assurer le coincement de l'élément filaire textile 8 et donc la fixation avec la came 3.

Préférentiellement, une extrémité de l'élément filaire textile 8 est fixée à une première came 3' avant de fixer l'autre extrémité selon le procédé décrit plus haut.

## Revendications

1. Dispositif de blocage à came comportant :
- une tête (1) ;
- au moins une came (3) montée mobile à pivotement autour d'au moins un arbre de pivotement (4), la au moins une came (3) étant mobile entre une position rétractée et une position étendue, le au moins un arbre de pivotement (4) étant fixé à la tête (1), la au moins une came (3) définissant au moins un premier trou (3a) et un deuxième trou (3b) qui sont traversants entre un premier côté et un deuxième côté de la au moins une came (3) ;
- un ressort (9) couplé fonctionnellement à la au moins une came (3) pour solliciter la au moins une came (3) vers la position étendue ;
- une extrémité annulaire (2) couplée mécaniquement à la tête (1) ;
- une tige (6) s'étendant depuis la tête (1) jusqu'à l'extrémité annulaire (2) ;
- une gâchette (7) montée mobile entre une première position de gâchette et une deuxième position de gâchette,
- un élément filaire textile (8) ayant une première extrémité montée fixement avec la au moins une came (3), l'élément filaire textile (8) reliant la gâchette (7) à la au moins une came (3), l'élément filaire textile (8) liant fonctionnellement la gâchette (7) à la au moins une came (3), lorsque la gâchette (7) est dans la deuxième position de gâchette la au moins une came (3) est dans la position rétractée ;
dispositif de blocage à came **caractérisé en ce que** l'élément filaire textile (8) passe à travers le premier trou (3a) et le deuxième trou (3b) pour introduire du frottement entre l'élément filaire textile (8) et la au moins une came (3) et **en ce qu'**une portion terminale de l'élément filaire textile (8) traverse un troisième trou (3c) reliant le premier coté et le deuxième coté et/ou est coincée dans au moins une rainure (3d) ménagée dans le premier côté ou le deuxième côté, la portion terminale de l'élément filaire textile (8) étant disposée postérieurement au deuxième trou (3b) selon une direction longitudinale de l'élément filaire textile (8) depuis la gâchette (7).

2. Dispositif de blocage à came selon la revendication 1 dans lequel la au moins une came (3) définit le troisième trou (3c) et dans lequel un brin aval de l'élément filaire textile (8) est coincé contre une face de la au moins une came (3) par un brin amont de l'élément filaire textile (8), le brin aval étant disposé plus loin de la gâchette (7) que le brin amont selon la direction longitudinale de l'élément filaire textile (8).

3. Dispositif de blocage à came selon l'une des revendications 1 et 2 dans lequel la au moins une came (3) définit la au moins une rainure (3d) et dans lequel une extrémité terminale de l'élément filaire textile (8) est encastrée dans la au moins une rainure (3d).

4. Dispositif de blocage à came selon la revendication 3 dans lequel la au moins une rainure (3d) relie le premier trou (3a) et le troisième trou (3c).

5. Dispositif de blocage à came selon la revendication 4 lorsqu'elle dépend de la revendication 2 dans lequel le brin aval est coincé dans la au moins une rainure (3d).

6. Dispositif de blocage à came selon l'une quelconque des revendications 1 à 5 dans lequel l'élément filaire textile (8) passe successivement par le premier trou (3a) et le deuxième trou (3b) selon la direction longitudinale de l'élément filaire textile (8) depuis la gâchette (7), dans lequel le premier trou (3a) définit une première extrémité avec le premier côté et une deuxième extrémité avec le deuxième côté, dans lequel l'élément filaire textile (8) pénètre dans le premier trou (3a) depuis le deuxième côté, la deuxième extrémité formant une deuxième zone d'appui de l'élément textile filaire (8) et dans lequel la deuxième zone d'appui possède une arête qui est moins vive qu'une arête de la première extrémité du premier trou (3a) et/ou moins vive qu'une arête d'une extrémité du deuxième trou (3b) avec l'une et/ou l'autre du premier côté et du deuxième côté.

7. Dispositif de blocage à came selon la revendication 6 dans lequel une paroi latérale du premier trou (3a) relie une face de la au moins une came (3) formant le deuxième côté et dans lequel la paroi latérale du premier trou (3a) définit une arête vive avec la deuxième face de la au moins une came (3) et/ou une paroi latérale du deuxième trou (3b) définit une arête vive avec la première face ou la deuxième face de la au moins une came (3).

8. Dispositif de blocage à came selon la revendication 6 dans lequel une paroi latérale du premier trou (3a) relie une face de la au moins une came (3) formant le deuxième côté et dans lequel la zone d'appui de la deuxième extrémité est un arc de cercle ayant un rayon de courbure au moins égal à la moitié de l'épaisseur de l'élément filaire textile (8).

9. Dispositif de blocage à came selon la revendication 7 dans lequel la paroi latérale du premier trou (3a) définit une arête vive avec la deuxième face de la au moins une came (3) et/ou une paroi latérale du deuxième trou (3b) définit une arête vive avec la première face ou la deuxième face de la au moins une came (3).

10. Dispositif de blocage à came selon l'une quelconque des revendications 1 à 9 dans lequel le premier trou (3a) et le deuxième trou (3b) débouchent dans une zone amincie (3e) ou un renfoncement (3f) de la au moins une came (3), la zone amincie (3e) ou le renfoncement (3f) représentant un amincissement au moins égal à une épaisseur d'un brin de l'élément filaire textile (8).

11. Dispositif de blocage à came selon l'une quelconque des revendications précédentes dans lequel d'une extrémité à l'autre de l'élément filaire textile (8) et selon la direction longitudinale de l'élément filaire textile (8), une section de l'élément filaire textile (8) est inférieure à une section du premier trou (3a) et du deuxième trou (3b).

12. Dispositif de blocage à came selon l'une quelconque des revendications précédentes dans lequel l'élément filaire textile (8) est uniquement fixé à la au moins une came (3) par coincement dans la au moins une rainure (3d) et/ou par frottement aux extrémités du premier trou (3a), du deuxième trou (3b) et du troisième trou (3c).

13. Dispositif de blocage à came selon l'une quelconque des revendications précédentes dans lequel la au moins une came (3) possède une première came (3') et une deuxième came (3") et dans lequel l'élément filaire textile (8) possède une première extrémité fixée à la première came (3') et une deuxième extrémité opposée fixée à la deuxième came (3").

14. Procédé de fabrication d'un dispositif de blocage à came comportant fournir un élément filaire textile (8) et un dispositif de blocage à came muni :
- d'une tête (1) ;
- d'au moins une came (3) montée mobile à pivotement autour d'au moins un arbre de pivotement (4), la au moins une came (3) étant mobile entre une position rétractée et une position étendue, le au moins un arbre de pivotement (4) étant fixé à la tête (1), la au moins une came (3) définissant au moins un premier trou (3a) et un deuxième trou (3b) ;
- d'un ressort (9) couplé fonctionnellement à la au moins une came (3) pour solliciter la au moins une came (3) vers la position étendue ;
- d'une extrémité annulaire (2) couplée mécaniquement à la tête (1) ;
- d'une tige (6) s'étendant depuis la tête (1) jusqu'à l'extrémité annulaire (2) ;
- d'une gâchette (7) liée fonctionnellement à la au moins une came (3), la gâchette (7) étant montée mobile entre une première position de gâchette et une deuxième position de gâchette, et dans la deuxième position de gâchette la au moins une came (3) est dans la position rétractée ;
procédé de fabrication **caractérisé en ce que** la au moins une came (3) comporte au moins un troisième trou (3c) et/ou au moins une rainure (3d) ;
dans lequel l'élément filaire textile (8) passe à travers du premier trou (3a), du deuxième trou (3b) et du au moins un troisième trou (3c) pour former des zones de frottement consécutives entre l'élément filaire textile (8) et la au moins une came (3) le long d'une direction longitudinale de l'élément filaire textile (8) ; et/ou dans lequel la au moins une rainure (3d) possède une largeur inférieure ou égale à une largeur de l'élément filaire textile (8), l'élément filaire textile (8) étant encastré par déformation dans la au moins une rainure (3d).

## Patentansprüche

1. Blockiervorrichtung mit Nocken, umfassend:
- einen Kopf (1);
- mindestens einen Nocken (3), der um mindestens eine Schwenkwelle (4) schwenkbar montiert ist, wobei der mindestens eine Nocken (3) zwischen einer zurückgezogenen Position und einer ausgefahrenen Position beweglich ist, wobei die mindestens eine Schwenkwelle (4) am Kopf (1) befestigt ist, wobei der mindestens eine Nocken (3) mindestens ein erstes Loch (3a) und ein zweites Loch (3b) definiert, die zwischen einer ersten Seite und einer zweiten Seite des mindestens einen Nockens (3) durchgehend sind;
- eine Feder (9), die mit dem mindestens einen Nocken (3) funktional gekoppelt ist, um den mindestens einen Nocken (3) zur ausgefahrenen Position hin vorzuspannen;
- ein ringförmiges Ende (2), das mit dem Kopf (1) mechanisch gekoppelt ist;
- einen Schaft (6), der sich vom Kopf (1) bis zum ringförmigen Ende (2) erstreckt;
- einen Auslöser (7), der zwischen einer ersten Auslöserposition und einer zweiten Auslöserposition beweglich montiert ist;
- ein textiles seilförmiges Element (8) mit einem ersten Ende, das an dem mindestens einen Nocken (3) fest angebracht ist, wobei das textile seilförmige Element (8) den Auslöser (7) mit dem mindestens einen Nocken (3) verbindet, wobei das textile seilförmige Element (8) den Auslöser (7) funktional mit der mindestens eine Nocke (3) verbindet, wenn der Auslöser (7) in der zweiten Auslöserposition ist und der mindestens eine Nocken (3) in der zurückgezogenen Position ist;
wobei die Blockiervorrichtung mit Nocken **dadurch gekennzeichnet ist, dass** das textile seilförmige Element (8) durch das erste Loch (3a) und das zweite Loch (3b) verläuft, um zwischen dem textilen seilförmigen Element (8) und dem mindestens einen Nocken (3) eine Reibung zu erzeugen, und dass ein Endabschnitt des textilen seilförmigen Elements (8) durch ein drittes Loch (3c) verläuft, das die erste Seite mit der zweiten Seite verbindet, und/oder in mindestens einer Nut (3d) eingeklemmt ist, die in der ersten Seite oder der zweiten Seite ausgespart ist, wobei der Endabschnitt des textilen seilförmigen Elements (8) hinter dem zweiten Loch (3b) in einer Längsrichtung des textilen seilförmigen Elements (8) vom Auslöser (7) aus angeordnet ist.

2. Blockiervorrichtung mit Nocken nach Anspruch 1, wobei der mindestens eine Nocken (3) das dritte Loch (3c) definiert, und wobei ein nachgelagerter Strang des textilen seilförmigen Elements (8) durch einen vorgelagerten Strang des textilen seilförmigen Elements (8) gegen eine Fläche des mindestens einen Nockens (3) geklemmt wird, wobei der nachgelagerte Strang in der Längsrichtung des textilen seilförmigen Elements (8) weiter vom Auslöser (7) entfernt angeordnet ist als der vorgelagerte Strang.

3. Blockiervorrichtung mit Nocken nach einem der Ansprüche 1 oder 2, wobei der mindestens eine Nocken (3) die mindestens eine Nut (3d) definiert, und wobei ein Abschlussende des textilen seilförmigen Elements (8) in die mindestens eine Nut (3d) eingebettet ist.

4. Blockiervorrichtung mit Nocken nach Anspruch 3, wobei die mindestens eine Nut (3d) das erste Loch (3a) und das dritte Loch (3c) verbindet.

5. Blockiervorrichtung mit Nocken nach Anspruch 4, wenn er von Anspruch 2 abhängig ist, wobei der vorgelagerte Strang in der mindestens einen Nut (3d) eingeklemmt ist.

6. Blockiervorrichtung mit Nocken nach einem der Ansprüche 1 bis 5, wobei das textile seilförmige Element (8) in der Längsrichtung des textilen seilförmigen Elements (8) vom Auslöser (7) aus nacheinander durch das erste Loch (3a) und das zweite Loch (3b) verläuft, wobei das erste Loch (3a) mit der ersten Seite ein erstes Ende und mit der zweiten Seite ein zweites Ende definiert, wobei das textile seilförmige Element (8) von der zweiten Seite aus in das erste Loch (3a) eindringt, wobei das zweite Ende einen zweiten Auflagebereich des textilen seilförmigen Elements (8) bildet, und wobei der zweite Auflagebereich eine Kante aufweist, die weniger scharf ist als eine Kante des ersten Endes des ersten Lochs (3a) und/oder weniger scharf ist als eine Kante eines Endes des zweiten Lochs (3b) mit der einen und/oder von der anderen der ersten Seite und der zweiten Seite.

7. Blockiervorrichtung mit Nocken nach Anspruch 6, wobei eine Seitenwand des ersten Lochs (3a) eine die zweite Seite bildende Fläche des mindestens einen Nockens (3) verbindet, und wobei die Seitenwand des ersten Lochs (3a) mit der zweiten Fläche des mindestens einen Nockens (3) eine scharfe Kante definiert und/oder eine Seitenwand des zweiten Lochs (3b) mit der ersten Fläche oder der zweiten Fläche des mindestens einen Nockens (3) eine scharfe Kante definiert.

8. Blockiervorrichtung mit Nocken nach Anspruch 6, wobei eine Seitenwand des ersten Lochs (3a) eine die zweite Seite bildende Fläche des mindestens einen Nockens (3) verbindet, und wobei der Auflagebereich des zweiten Endes ein Kreisbogen ist, dessen Krümmungsradius mindestens gleich der Hälfte der Dicke des textilen seilförmigen Elements (8) ist.

9. Blockiervorrichtung mit Nocken nach Anspruch 7, wobei die Seitenwand des ersten Lochs (3a) mit der zweiten Seite des mindestens einen Nockens (3) eine scharfe Kante definiert und/oder eine Seitenwand des zweiten Lochs (3b) mit der ersten Seite oder der zweiten Seite des mindestens einen Nockens (3) eine scharfe Kante definiert.

10. Blockiervorrichtung mit Nocken nach einem der Ansprüche 1 bis 9, wobei das erste Loch (3a) und das zweite Loch (3b) in einen verdünnten Bereich (3e) oder eine Vertiefung (3f) des mindestens einen Nockens (3) münden, wobei der verdünnte Bereich (3e) oder die Vertiefung (3f) eine Verdünnung darstellt, die mindestens gleich einer Dicke eines Strangs des textilen seilförmigen Elements (8) ist.

11. Blockiervorrichtung mit Nocken nach einem der vorherigen Ansprüche, wobei von einem Ende zum anderen des textilen seilförmigen Elements (8) und in der Längsrichtung des textilen seilförmigen Elements (8) ein Querschnitt des textilen seilförmigen Elements (8) kleiner ist als ein Querschnitt des ersten Lochs (3a) und des zweiten Lochs (3b).

12. Blockiervorrichtung mit Nocken nach einem der vorherigen Ansprüche, wobei das textile seilförmige Element (8) nur durch Einklemmen in die mindestens einen Nut (3d) und/oder durch Reibung an den Enden des ersten Lochs (3a), des zweiten Lochs (3b) und des dritten Lochs (3c) an dem mindestens einen Nocken (3) befestigt ist.

13. Blockiervorrichtung mit Nocken nach einem der vorherigen Ansprüche, wobei der mindestens eine Nocken (3) einen ersten Nocken (3') und einen zweiten Nocken (3") aufweist, und wobei das textile seilförmige Element (8) ein erstes Ende aufweist, das an dem ersten Nocken (3') befestigt ist, und ein entgegengesetztes zweites Ende, das an dem zweiten Nocken (3") befestigt ist.

14. Verfahren zur Herstellung einer Blockiervorrichtung mit Nocken, umfassend das Bereitstellen eines textilen seilförmigen Elements (8) und einer Blockiervorrichtung mit Nocken, versehen mit:
einem Kopf (1),
- mindestens einem Nocken (3), der um mindestens eine Schwenkwelle (4) schwenkbar montiert ist, wobei der mindestens eine Nocken (3) zwischen einer zurückgezogenen Position und einer ausgefahrenen Position beweglich ist, wobei die mindestens eine Schwenkwelle (4) am Kopf (1) befestigt ist, wobei der mindestens eine Nocken (3) mindestens ein erstes Loch (3a) und ein zweites Loch (3b) definiert;
- einer Feder (9), die mit dem mindestens einen Nocken (3) funktional gekoppelt ist, um den mindestens einen Nocken (3) zur ausgefahrenen Position hin vorzuspannen;
- einem ringförmigen Ende (2), das mit dem Kopf (1) mechanisch gekoppelt ist;
- einem Schaft (6), der sich vom Kopf (1) bis zum ringförmigen Ende (2) erstreckt;
- einem Auslöser (7), der mit dem mindestens einen Nocken (3) funktional verbunden ist, wobei der Auslöser (7) zwischen einer ersten Auslöserposition und einer zweiten Auslöserposition beweglich montiert ist, und in der zweiten Auslöserposition der mindestens eine Nocken (3) in der zurückgezogenen Position ist;
wobei das Herstellungsverfahren **dadurch gekennzeichnet ist, dass** der mindestens eine Nocken (3) mindestens ein drittes Loch (3c) und/oder mindestens eine Nut (3d) umfasst;
wobei das textile seilförmige Element (8) durch das erste Loch (3a), das zweite Loch (3b) und mindestens ein drittes Loch (3c) verläuft, um in einer Längsrichtung des textilen seilförmigen Elements (8) aufeinanderfolgende Reibungsbereiche zwischen dem textilen seilförmigen Element (8) und dem mindestens einen Nocken (3) zu bilden; und/oder
wobei die mindestens eine Nut (3d) eine Breite aufweist, die kleiner oder gleich einer Breite des textilen seilförmigen Elements (8) ist, wobei das textile seilförmige Element (8) durch Verformung in die mindestens eine Nut (3d) eingebettet ist.

## Claims

1. Camming clamping device comprising:
- a head (1);
- at least one cam (3) installed in movable manner pivoting around at least one pivot shaft (4), the at least one cam (3) being movable between a retracted position and an extended position, the at least one pivot shaft (4) being fixed to the head (1), the at least one cam (3) defining at least a first hole (3a) and a second hole (3b) that are pass-through between a first side and a second side of the at least one cam (3);
- a spring (9) functionally coupled to the at least one cam (3) to bias the at least one cam (3) to the extended position;
- an annular end (2) mechanically coupled to the head (1);
- a rod (6) extending from the head (1) to the annular end (2);
- a trigger (7) mounted movable between a first trigger position and a second trigger position,
- a textile wire element (8) having a first end installed fixedly with the at least one cam (3), the textile wire element (8) connecting the trigger (7) to the at least one cam (3), the textile wire element (8) linking the trigger (7) functionally to the at least one cam (3), when the trigger (7) is in the second trigger position the at least one cam (3) is in the retracted position;
camming clamping device **characterised in that** the textile wire element (8) passes through the first hole (3a) and the second hole (3b) to introduce friction between the textile wire element (8) and the at least one cam (3), and **in that** a terminal portion of the textile wire element (8) passes through a third hole (3c) connecting the first side and the second side and/or is wedged in at least one groove (3d) arranged in the first side or the second side, the terminal portion of the textile wire element (8) being arranged posteriorly to the second hole (3b) in a longitudinal direction of the textile wire element (8) away from the trigger (7).

2. Camming clamping device according to claim 1 wherein the at least one cam (3) defines the third hole (3c) and wherein a downline strand of the textile wire element (8) is wedged against a face of the at least one cam (3) by an upline strand of the textile wire element (8), the downline strand being located farther from more the trigger (7) than the upline strand in the longitudinal direction of the textile wire element (8).

3. Camming clamping device according to one of claims 1 and 2 wherein the at least one cam (3) defines the at least one groove (3d) and wherein a terminal end of the textile wire element (8) is embedded in the at least one groove (3d).

4. Camming clamping device according to claim 3 wherein the at least one groove (3d) connects the first hole (3a) and the third hole (3c).

5. Camming clamping device according to claim 4 when it depends on claim 2 wherein the downline strand is wedged in the at least one groove (3d).

6. Camming clamping device according to anyone of claims 1 to 5 wherein the textile wire element (8) passes successively via the first hole (3a) and the second hole (3b) in the longitudinal direction of the textile wire element (8) away from the trigger (7), wherein the first hole (3a) defines a first end with the first side and a second end with the second side, wherein the textile wire element (8) enters the first hole (3a) from the second side, the second end forming a second pressing area of the textile wire element (8) and wherein the second pressing area has an edge that is less sharp than an edge of the first end of the first hole (3a) and/or less sharp than an edge of the second hole (3b) with one and/or the other of the first side and the second side.

7. Camming clamping device according to claim 6 wherein a side wall of the first hole (3a) connects a face of the at least one cam (3) forming the second side, and wherein the side wall of the first hole (3a) defines a sharp edge with the second face of the at least one cam (3) and/or a side wall of the second hole (3b) defines a sharp edge with the first face or the second face of the at least one cam (3).

8. Camming clamping device according to claim 6 wherein a side wall of the first hole (3a) connects a face of the at least one cam (3) forming the second side, and wherein the pressing area of the second end is an arc of a circle having a radius of curvature at least equal to half the thickness of the textile wire element (8).

9. Camming clamping device according to claim 7 wherein the side wall of the first hole (3a) defines a sharp edge with the second face of the at least one cam (3) and/or a side wall of the second hole (3b) defines a sharp edge with the first face or the second face of the at least one cam (3).

10. Camming clamping device according to anyone of claims 1 to 9 wherein the first hole (3a) and the second hole (3b) open into a thinned area (3e) or a recess (3f) of the at least one cam (3), the thinned area (3e) or the recess (3f) representing a thinning at least equal to a thickness of a strand of the textile wire element (8).

11. Camming clamping device according to anyone of the preceding claims wherein, from one end to of the textile wire element (8) to the other and in the longitudinal direction of the textile wire element (8), a cross-section of the textile wire element (8) is smaller than a cross-section of the first hole (3a) and of the second hole (3b).

12. Camming clamping device according to anyone of the preceding claims wherein the textile wire element (8) is only fixed to the at least one cam (3) by wedging in the at least one groove (3d) and/or by friction at the ends of the first hole (3a), the second hole (3b) and the third hole (3c).

13. Camming clamping device according to anyone of the preceding claims wherein the at least one cam (3) has a first cam (3') and a second cam (3") and wherein the textile wire element (8) has a first end fixed to the first cam (3') and an opposite second end fixed to the second cam (3").

14. Method for manufacturing a camming clamping device comprising provision of a textile wire element (8) and a camming clamping device provided with:
- a head (1);
- at least one cam (3) mounted movable pivoting around at least one pivot shaft (4), the at least one cam (3) being movable between a retracted position and an extended position, the at least one pivot shaft (4) being fixed to the head (1), the at least one cam (3) defining at least a first hole (3a) and a second hole (3b);
- a spring (9) functionally coupled to the at least one cam (3) to bias the at least one cam (3) to the extended position;
- an annular end (2) mechanically coupled to the head (1);
- a rod (6) extending from the head (1) to the annular end (2);
- a trigger (7) functionally coupled to the at least one cam (3), the trigger (7) being mounted movable between a first trigger position and a second trigger position, and in the second trigger position the at least one cam (3) is in the retracted position;
method for manufacturing **characterized in that** the at least one cam (3) comprises at least a third hole (3c) and/or at least one groove (3d);
wherein the textile wire element (8) passes through the first hole (3a), the second hole (3b) and the at least a third hole (3c) to form consecutive friction areas between the textile wire element (8) and the at least one cam (3) along a longitudinal direction of the textile wire element (8); and/or
wherein the at least one groove (3d) has a width that is less than or equal to a width of the textile wire element (8), the textile wire element (8) being embedded by deformation in the at least one groove (3d).
